# EUROPEAN PATENT SPECIFICATION

(11) **EP 3 954 201 B1**
(45) Date of publication and mention of the grant of the patent: **18.01.2023**
(21) Application number: 20217680.6
(22) Date of filing: 29.12.2020
(51) Int. Cl.: A01G 15/00

(54) **METHOD OF REDUCING DUST ACCUMULATION IN THE SMOG LAYER, WHICH IS THE INVERSION LAYER**
VERFAHREN ZUR VERRINGERUNG DER STAUBANSAMMLUNG IN DER SMOGSCHICHT, DIE DIE INVERSIONSSCHICHT IST
PROCÉDÉ DE RÉDUCTION DE L'ACCUMULATION DE POUSSIÈRE DANS LA COUCHE DE SMOG, QUI EST LA COUCHE D'INVERSION

(30) Priority: 11.08.2020 PL 43493320
(43) Date of publication of application: 16.02.2022
(73) Proprietor: Akademia Gorniczo-Hutnicza im. Stanislawa Staszica w Krakowie, 30-059 Krakow (PL)
(72) Inventor: LESZCZYNSKI, Jacek, 42-224 Czestochowa (PL); KUBICA, Barbara, 30-864 Kraków (PL); SUWALA, Wojciech, 31-326 Kraków (PL); STOBINSKI, Marcin, 32-085 Tomaszowice (PL); SZARLOWICZ, Katarzyna, 32-082 Wieckowice (PL); ZYSK, Janusz, 31-932 Kraków (PL); JEDRZEJEK, Filip, 31-932 Kraków (PL); GRYBOS, Dominik, 38-333 Zagórzany (PL); BOREK, Maciej, 31-619 Kraków (PL)
(74) Representative: Kondrat, Mariusz

(56) References cited:
- CN-A- 101 473 765
- CN-A- 105 714 726
- CN-A- 110 426 754
- JP-A- S51 139 368
- RU-C1- 2 694 200
- US-A- 3 848 801
- Laitinen Antti: "UTILIZATION OF DRONES IN VERTICAL PROFILE MEASUREMENTS OF THE ATMOSPHERE", Tampere University, 1 July 2019 (2019-07-01), pages 1-80, XP055809522, Retrieved from the Internet: URL:https://trepo.tuni.fi/bitstream/handle /10024/116237/LaitinenAntti.pdf?sequence=2 &isAllowed=y

## Description

The object of the invention is a method of lowering the accumulation of dusts in the smog layer, especially when there are no factors that would naturally lower the accumulation of dusts in the smog layer. Smog is an atmospheric phenomenon resulting from the mixing of humid air with smoke, fumes and solid particles, very often accompanied by the occurrence of moisture condensation (fog). Air pollution, such as smog (of the London type), is caused by the emission of large quantities of chemical compounds hazardous to health into the atmosphere, such as, among others: sulphur oxides and nitrogen oxides and carcinogenic polycyclic aromatic hydrocarbons (PAHs), as well as solid substances, i.e. particulate matter (including PM10, PM2.5 also considered to be carcinogenic). Particulate Matter (PM) is a mixture of solid particles of different fractions in gaseous or liquid phase (excluding water droplets), suspended in moist air. Sources of air dustiness of dust particles are mainly: low emissions including, among others, combustion of solid fuels in the municipal and commercial sector, automotive transport, or unprotected dusty material landfills.

The exact composition of the dust depends on the conditions in which it was created, but it often contains polycyclic aromatic hydrocarbons, heavy metals, furans, sulphur, radionuclides of natural and possibly artificial origin and asbestos. Many of the dust components, e.g. benzo(a)pyrene, arsenic, lead, cadmium or nickel, have a negative impact on human health and lead primarily to respiratory, cardiovascular and cancer diseases. Among other things, arsenic and its compounds have been identified by the International Agency for Research on Cancer (IARC) as carcinogenic to humans and are listed in Group 1, as described in the publication entitled *"*Arsen i nieorganiczne zwiqzki arsenu. Wytyczne szacowania ryzyka zdrowotnego dla czynników rakotwórczych" IMP, 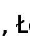 ódź 2003, vol. 17, 5.

In the analysis of air quality and the relationship between air quality and human health, there are usually three fractions of particulate matter: PM10 dust, which consists of fractions of particles up to 10 µm, PM2.5 dust, which consists of fractions of particles up to 2.5 µm, and PM1 dust, which consists of fractions of ultra-fine particles up to 1 µm. According to the WHO (World Health Organization) standards, the acceptable daily average accumulation of particulate matter is 50 µg/m³ for PM10 and 25 µg/m³ for PM2.5. Particulate matter has different mineral composition, but is a very good sorbent of both heavy metals and gamma and alpha emitters. Recent data from epidemiological studies provide evidence that human exposure to fine particulate matter in the air is associated with an increased risk of heart arrhythmia, ischemic stroke and many other not fully identified diseases.

Therefore, it is extremely important and necessary to take every effort to improve the air quality, especially if the dust level exceeds the acceptable standards.

The mechanism of dust accumulation in the ground layer of the atmosphere is conditioned by many random atmospheric factors, and in particular by the disappearance of vertical convective movements of air masses, resulting from an even vertical temperature profile and low temperatures values. The cause of the disappearance of convection in the ground layer is, for the most part, the resulting inversion layer, in which the area of occurrence, the distribution of the vertical gradient of air temperature deviates from the prevalent type of temperature gradient, characterized by an even temperature drop. In the inversion layer, the temperature, together with the altitude, increases or does not change, while in normal conditions it should decrease. The inversion layer, which consists of the deposited mass of warmer air, creates a covering layer for the mass of colder air near the ground, which results in the disappearance of convection, which is a natural mechanism for dispersing particulate matter suspended in the air.

The natural convection of the masses of the air mixture with moisture, gases and solids disappears along the height from the ground when the temperature gradient in the inversion layer is less than 1.0 Celsius degree per 100 m height for moisture air (with relative humidity over 80%) or less than 0.6 degree per 100 m for dry air (with relative humidity less than 80%). Such conditions occur most often in the autumn-winter and winter-spring periods, along with a decrease in ground air temperature.

Due to the resulting inversion layer, the differences are disappearing in the densities of moist and dusty air, observed along the height, and thus the buoyancy force *F̅_{W}* acting on a single particle suspended in the air, as well as the aerodynamic drag force of air *F̅_{D}*, the Magnus force *F̅_{M},* the transverse pressure gradient force *F̅_{P}*, the Saffman force *F̅_{S}* are balanced with the gravity forces *F̅_{G}* and cohesion forces *F̅_{K}* and Coriolis *F̅_{C}.* The solid particles are suspended in the air at certain heights, constantly migrating among themselves, but do not elevate. Transversal convective movements of moist and polluted air, caused by a change in the transverse pressure increase, move the solid particles to places with faults, basins, collapses and everywhere where the terrain indicates a decrease in height. An important value here is the height of the suspension of the cloud contaminated with solid particles calculated from the ground surface. This height is a constant value and results from the equilibrium state of gravity force derived from the mass of the particles and the forces causing lift of the particles, mentioned above. As a result of the disappearance of delamination of air temperature, which does not meet the condition of falling by 1 Celsius degree per 100 m in height, the dusts are accumulated in the windless atmospheric boundary layer, at varying heights, many times exceeding the acceptable levels of pollutants for human health and life. If during the migration of dusts, as a result of changes in the terrain elevation, there is a decrease in the height of the ground, then the particle cloud, moving towards the state of equilibrium, also decreases its position. For example, in the Cracow Basin (Bokwa A., Zanieczyszczenie powietrza D. Matuszko (red.) Klimat Krakowa w XX wieku, Instytut Geografii i Gospodarki Przestrzennej UJ, 2007, 187-199) particulate matter suspended in the form of a cloud of damp and polluted air are registered at heights ranging from several to 200 m. This cloud in the form of a layer of smog with accumulation of PM10, PM2,5, PM1 dusts exceeding the acceptable standards is created on a windless, cold day. Especially often this phenomenon occurs in a basin, where in case of disappearance of convective movements of air masses there is an accumulation of low emission dusts. The time of depositing a layer of smog with high accumulations of dust depends (is strongly correlated) on the prevailing weather conditions and ranges from several hours to several days. The natural conditions causing the shortening of deposit time of this layer are a windy day, a day with precipitation and a warm day. The deposit time of the smog layer is directly influenced by air temperature, wind speed and air humidity. The disappearance of convective dust lifting causes the accumulation of dusts in the ground layers to increase continuously, significantly affecting air quality. This situation lasts until the area of temperature inversion is naturally dispersed (precipitation, strong wind from any direction or increase in air temperature).

Therefore, any action which, during the period of the smog layer's accumulation with dust accumulations exceeding acceptable standards, in the absence of natural dispersion factors, aims at inhibiting the deterioration of the air condition, even immediate and temporary, is valuable and desirable.

The patent literature provides solutions aimed at immediate temporary improvement of air quality, with accumulations of dust exceeding acceptable standards.

A method of removing particulate matter from the city's foggy air is known from patent application CN104689661 A. The method includes the following steps:
placing a huge well in a place with the lowest height in the suburban zone, effectively drawing polluted air into the well, removing dusts and disinfecting the air successively. The technology assumes the flow of purified air back into the city through the existing network of city pipes. The plan of distribution of air intake wells is laid out in accordance with the city road plan, using the current installation networks. The air after the cleaning process is returned to the city to dilute the remaining pollutants in the air. The method improves air cleanliness and reduces the damage associated with the impact of particulate matter on human health. However, the application of this system on an urban scale requires considerable investment. Existing undeveloped pipeline networks in cities are often spread out in a chaotic way. The use of these networks for new purposes involves the expansion of numerous links between existing channels and extensive planning of new channels. In the conditions of dense city center development, such activities can be extremely difficult. In addition, some installations that are not used for a long time may degrade, which also has to be renovated accordingly. Application EP2125156 A1 discloses a method and device for the removal of fine particles from the air in a residential area with a short range, up to several meters. Polluted air is sucked in by the device from the environment, at a height of up to one meter. Coarse-grained particles are first caught using filters. The air is then cleaned of fine dust fractions up to 0.2 µm in grain size. It is possible to use activated carbon filters or electrostatic filters to capture dusts and other harmful substances. Pollution in the form of sludge goes to water tanks, where they are disposed. In this solution, the range of impact is very small, a relatively large number of devices are required, which in conditions of high dust accumulation may require continuous operation and additionally filter replacement.

A method of capturing particulate matter coming from road transport is known from patent description JP3958622 B2. The method involves filter placement along the roadway on walls e.g. acoustic screens. Various types of adsorbents can be used, preferably located at a height of about one meter, properly profiled in relation to the roadway, in order to catch dust more effectively, as well as electrostatic precipitators. It is also possible to use devices built into the wall to remove solid particles. This solution applies only to dust of communication origin, it is not complementary to other emission sources.

Another method, known from patent description CH689181A5, of removing particulate matter from urban air, involves sucking the polluted air into the urban drainage system, where the dust is partially precipitated and the remaining part of the dust is separated on filters with the return of clean air into the atmosphere. Preferably polluted air is cleaned with water. In case of continuous use of this solution, the operating costs seem to be considerable and, in addition, continuous operation of the fans can be burdensome for residents.

The system for forcing air masses to move over open areas, especially for stimulating and supporting air streams over open urbanized areas, is known from patent application PL424785 A1. It contains elements forcing air movement situated on supporting elements, which is characterized in that there are at least two air movement forcing elements in the same direction on at least one line determined on the ventilated area, positioned on the supporting elements and spaced between 29 H and 51 H, where H is the height from the level of the base of the supporting element to the axis of attachment of the air movement forcing element. Air movement forcing elements on the same line generate an air stream with a flow rate of at least 4700 m³/s, and the height from the level of the base of the supporting elements to the axis of the air movement forcing element attachment is between 40 m and 60 m. Another system for forcing air masses to move over open areas is also known from patent application PL424786 A1. It contains airflow elements located on supporting elements, which is characterized in that, that on each of at least three radiuses of the circle, determined on the ventilated area, at an equal angular distance from each other, at least one airflow element is located towards the center of the circle, generating an airflow of at least 4700 m³/s, located on the supporting element. The height from the level of the base of the support element to the axis of the air movement forcing element is between 40 m and 60 m. In the center of the circle, for each of the radius on which the air movement forcing element is placed towards the center of the circle, there is a central air movement forcing element upwards, generating an air stream with a flow rate of at least 4700 m³/s, placed on the supporting element, whose height from the level of the base of the supporting element to the axis of attachment of the central air movement forcing element is in the range of 40 m to 60 m.

The above described solutions increase the movement of air in the ground layer, affecting the height of about 70 meters. However, the problem of dust particles remaining in urban areas is largely related to the emerging area of temperature inversion. This area, causes the disappearance of natural convective movements of the air masses and stops the process of natural dusts rising from the ground layer. The height of the temperature inversion area varies and depends on the location of the temperature inversion layer, which is usually located higher than 70 meters, usually from 100 to 200 meters.

The effect of using solutions mentioned in the description of the state of the art is the mixing of closed air in the area of temperature inversion, which may lead to a slight reduction of accumulations, without affecting the interruption of the layer of temperature inversion and elimination of the state of stagnation of temperature convection characterizing the area. Additionally, for the implementation of inventions disclosed in the state of the art, it is necessary to significantly expand the infrastructure in the form of supporting elements and forcing air movement. It involves considerable investment expenditures and constitutes a visible interference in the landscape.

The object of the invention is to develop a method of reducing dust accumulation in the smog layer, which is an inversion layer, deposited in connection with weather conditions, and to maximally shorten the time of stagnant conditions preventing the natural process of smog dispersion. The object is also to reduce the accumulation of dusts suspended in polluted air, especially in situations of a sudden increase in the level of dust pollution, especially in metropolitan areas and maintaining air pollution, in the ground layer up to 100 m, at the level required by the WHO recommended values and the current Directive 2008/50/EC of the European Parliament and of the European Council of 21 May 2008 on ambient air quality and cleaner air for Europe (CAFE).

According to the invention, the essence of the method of lowering the accumulation of dusts in the smog layer, which is an inversion layer, especially when there are no factors conducive to natural lowering of the accumulation of dusts in the smog layer, in which the mobile measuring station is used, equipped with devices for measuring air temperature, wind speed and dust accumulation, as well as an anti-hail cannon and a properly programmed computer comprising a central unit, is based on the fact that based on the measurements performed, the position of the inversion layer and its parameters are determined and then, using the anti-hail cannon, the structure of the inversion layer is destroyed.

First, the air temperature and wind speed as well as the accumulation of PM 10, PM 2.5 in area are measured in situ, using a mobile measuring station (MSP), on a measuring path from 0 to the altitude at which the inversion layer is identified or up to 500 m. These measurements are taken at predetermined measuring points, 1 to 20 m apart, preferably 1 m away from each other, and the results are transmitted by RF to the central unit, where they are compared with reference data and archived. On the basis of the performed measurements it is determined whether it is advisable to use the method according to the invention. If the average wind speed, calculated on the basis of previously made measurements, is greater than 0.8 m/s and/or the temperature drop on every subsequent 10 m altitude is greater than 1.0°C, then there are natural smog dispersion conditions and it is not advisable to continue with the method according to the invention. In this case, the measurement is stopped and the mobile measuring station is brought to the ground. On the other hand, if the wind speed is less than 0.8 m/s and/or the temperature drop on the 10 m altitude is less than 1.0°C, the mobile measuring station is raised to the next measuring point and continues the measurements, recognizing that the weather conditions warrant the continuation of the method. If, during the measurement process, at least 5 consecutive measurements at intervals of 1 m are obtained showing an accumulation of PM 10 greater than 50 µg/m³ and/or an accumulation of PM 2.5 greater than 25 µg/m³ and a temperature drop of 10 m altitude, less than 0.1°C, the measured area shall be considered an inversion layer. The lower boundary of this layer is the measurement height at which the dust accumulation limits were measured and the low temperature gradient, which characterizes the inversion layer. In order to determine the upper boundary of the inversion layer, measurements shall be continued until at least 5 consecutive measurements at intervals of 1 m are obtained, showing an accumulation of PM 10 less than 50 µg/m³ and/or an accumulation of PM 2.5 less than 25 µg/m³ and a temperature drop on the 10 m altitude greater than 0.1°C. Measuring such values indicates the leaving the inversion layer. The upper boundary of the inversion layer is the highest height at which the measurement showed conditions specific to the inversion layer. After determining the parameters of the inversion layer, the mobile measuring station is brought down to the ground. On the basis of parameters locating the inversion layer, the size of the shock wave cycle is determined. The length of a single cycle is at least 10 minutes and consists of at least 60 explosions of the explosive mixture. The minimum range of the explosion cycle is defined for an inversion layer with a lower boundary of 70 m and a thickness not exceeding 30 m. At the lower inversion layer boundary located higher and at a thicker layer, the shock wave cycle is extended by 1 minute for every 10 m higher position of the lower inversion layer boundary and for every 10 m thicker inversion layer.

Generating a shock wave starts with the introduction of a mixture of combustible gases and air into the detonation chamber of the shock wave generator under pressure and then triggers its explosion. The outlet stream of gases is directed to, the nozzle ending with a nozzle cone angle from 8° to 12°, the outlet pipe is perpendicular to the ground. The detonation pressure of the combustible gas mixture is not less than 1 MPa. The filling of the detonation chamber of the shockwave generator is continuous and the interval between the initiation of subsequent explosions is no longer than 10 seconds. After the shock wave generation cycle is completed, the dust accumulation is measured at a distance of 10 to 20 m from the axis of the shot, using a mobile measuring station, on the same path as the measurements were made before the shock wave generation cycle. In order to check the effects of the executed cycle of generated shock waves, the arithmetic average is calculated from the measurements of accumulations made from 0 m to the level of the upper inversion layer, before the shock wave generation cycle and the calculated arithmetic average is subtracted from the measurements of accumulations made after the shock wave generation cycle. If the calculated difference from the arithmetic averages of the accumulation measurements is ≥15%, the method is stopped for at least 1 - 4 hours, and if it is less than 15%, the shock wave generation cycle is immediately repeated.

However, if, as a result of the measurements carried out, a decrease in the average PM 10 accumulation below 40 µg/m³ and an average PM 2.5 accumulation below 20 µg/m³ is found, the procedure of lowering the accumulation of dusts in the smog layer ends.

In order to increase the effectiveness of the method of lowering dust accumulation in the inversion layer, shortening the time of its dispersion, especially in the case of dust accumulation at a critical level, several times exceeding the WHO standards, a group of shock wave generators operating simultaneously is activated. If more than one generator is used, the generators are arranged in a circle and the distance between the individual generators is 2 R, where R is the radius of the base of the inverted cone, the shape of which takes the form of an impact wave, at the level of its contact with the lower boundary of the inversion layer, occurring at a height of 100 m. Increased efficiency is also achieved by the generators being properly deflected from the vertical. In order to increase the effectiveness of the shock wave generators, their outlet lines are positioned at an angle of no more than 30° to the vertical, counting from the vertical. If the lower limit of the inversion layer is at a height of 50 m to 100 m, a nozzle with a 12° cone top angle is preferably used. However, when the lower boundary of the inversion layer is at a height of 100 m to 150 m, a nozzle with the top angle of the cone 10° is used, and when the lower boundary of the inversion layer is at a height of 150 m, a nozzle with the top angle of the cone 8° is preferably used.

In this method, according to the invention, a mobile measuring station is used to carry out measurements, which is a flying device, preferably a drone type, equipped with appropriate measuring devices and wireless communication devices, programmed and controlled by the central unit via wireless communication.

The advantage of the method according to the invention is that it allows to change the state of stagnant conditions preventing the natural process of smog dispersion. Destruction of the structure of the inversion layer carried out according to the invention shortens the duration of unfavorable conditions of lack of thermal convection and restores conditions for the natural process of smog dispersion. The method according to the invention does not require significant investments in infrastructure. It is simple and cheap to implement. The devices necessary for the implementation of the method are easy to disassemble and can be moved to any place. It eliminates the state of passive waiting for weather conditions to change, which will reduce the state of dustiness in the area formed under the inversion layer. The use of elements of the method according to the invention allows to reduce the accumulation of particulate matter suspended in the polluted air, especially in situations of a sudden increase in the level of dust pollution, especially in metropolitan areas, and to maintain the air pollution, at a level considered to be of little detriment to human health.

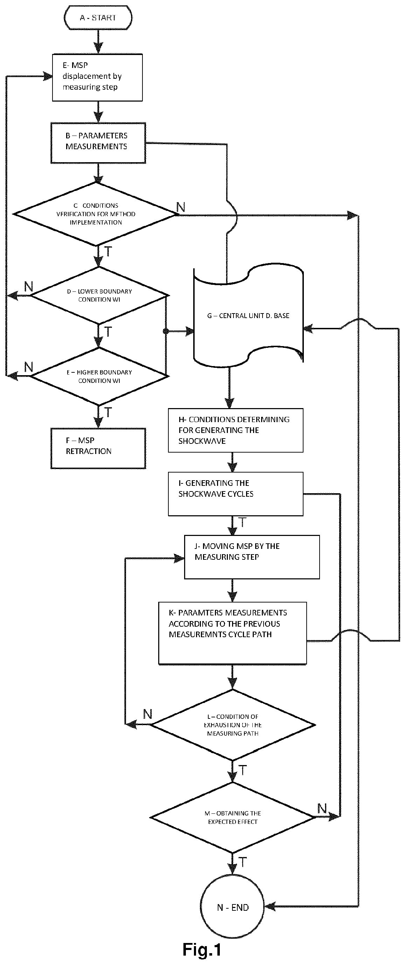

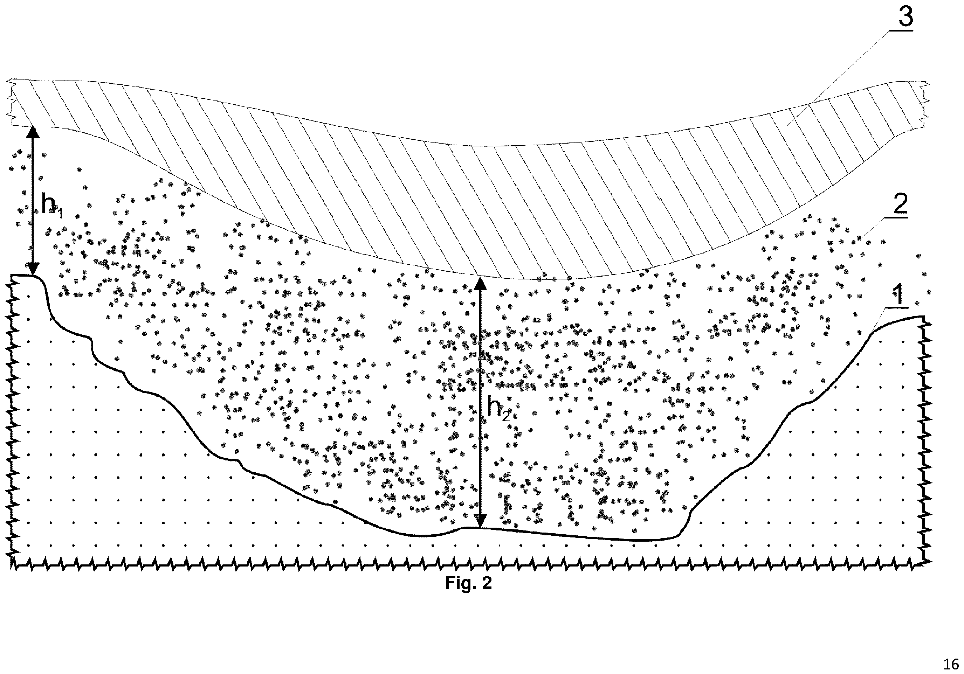

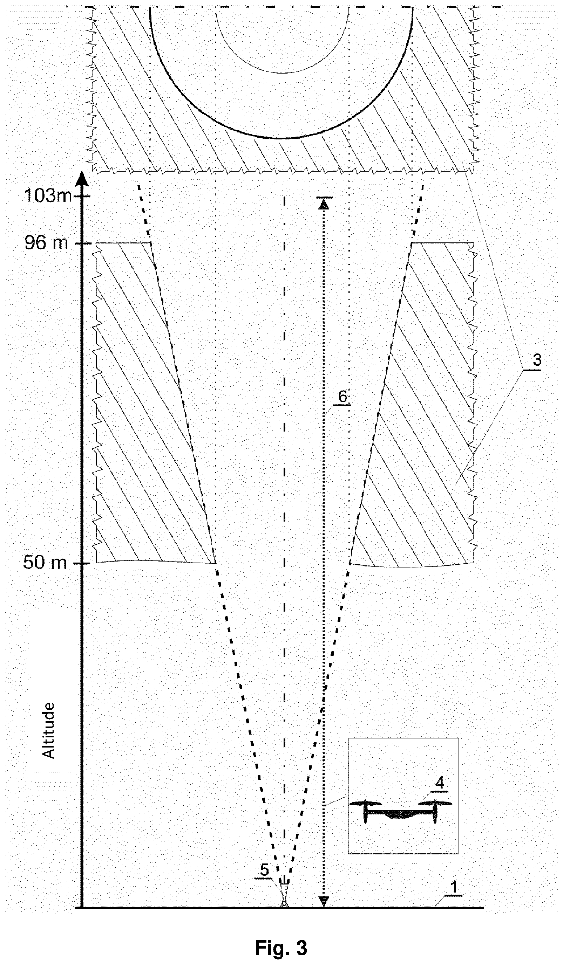

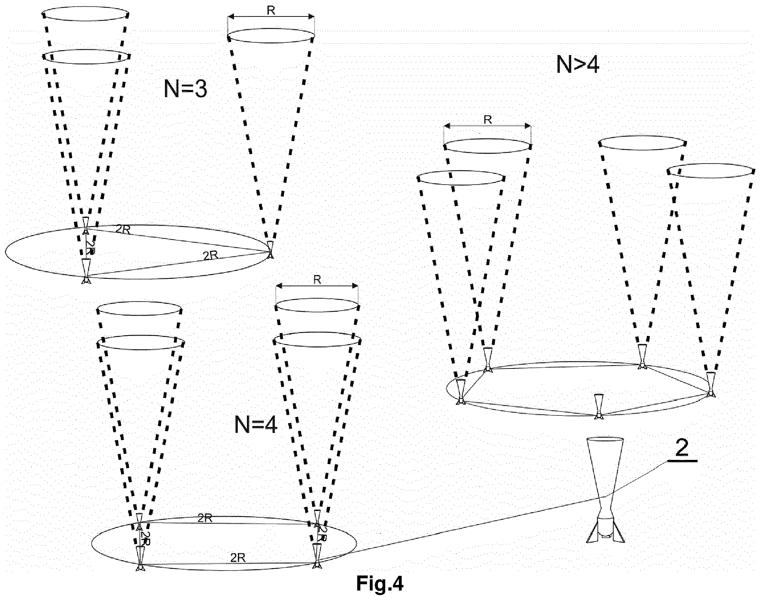

The object of the invention is described in more detail by an example of the implementation of a method of reducing dust accumulation in the inversion layer, the elements of which are shown in a drawing on which fig.1 shows the algorithm of operations and activities performed in the method according to the invention, fig.2 shows, in a simplified form, the situation in which the method according to the invention is implemented, fig.3 shows, in a simplified form, the effect of penetration of the shock wave of the first explosion in the inversion layer, fig.4 shows the scheme of arrangement of generator groups with the amount of N > 2, fig. 5 shows a diagram of the air temperature profile in relation to height and fig. 6 shows a diagram of PM 10 accumulation measurements before and after the shooting cycle.

In an example of an implementation of a method to reduce the accumulation of dust in the smog layer, which is the inversion layer, Inopower anti-hail cannon, powered by acetylene, with an overpressure of 6 bar, was used. The detonation chamber of this cannon has a volume of 0.67 m3. The stream of exhaust gases constituting the shock wave is directed, in Inopower's anti-hail cannon, to an outlet pipe 3 m long, ending with a nozzle with a cone tip angle of 12°. The gun was set vertically (0° angle counted from the vertical), the detonation pressure was 1 MPa.

For the measurements Yuneec Typhoon H520 drone was used, equipped with an altimeter, integrated sensor for measuring temperature from -20°C - + 50°C, humidity from 20% to 95% RH, pressure from 800 mbar - 1150 mbar, FT205 sensor for measuring wind speed and direction from 0 to 75 m/s and two sensors for PM 10 and PM 2.5 Atmon FL type with a measuring range of 0 - 999 µg/m³ and a resolution of 15 µg/m³ and a transmitter for radio transmission of measurement results.

The method of decreasing the accumulation of dusts in the smog layer constituting the inversion layer was performed on 25.11.2019 on the next day of increasing the accumulation of dusts in the ground layer and in stagnant conditions preventing the natural process of smog dispersion.

The first step was to determine the parameters of the inversion layer, based on the results of measurements carried out using the mobile measurement station The results of measurements and calculations are presented in Table 1.

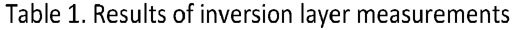

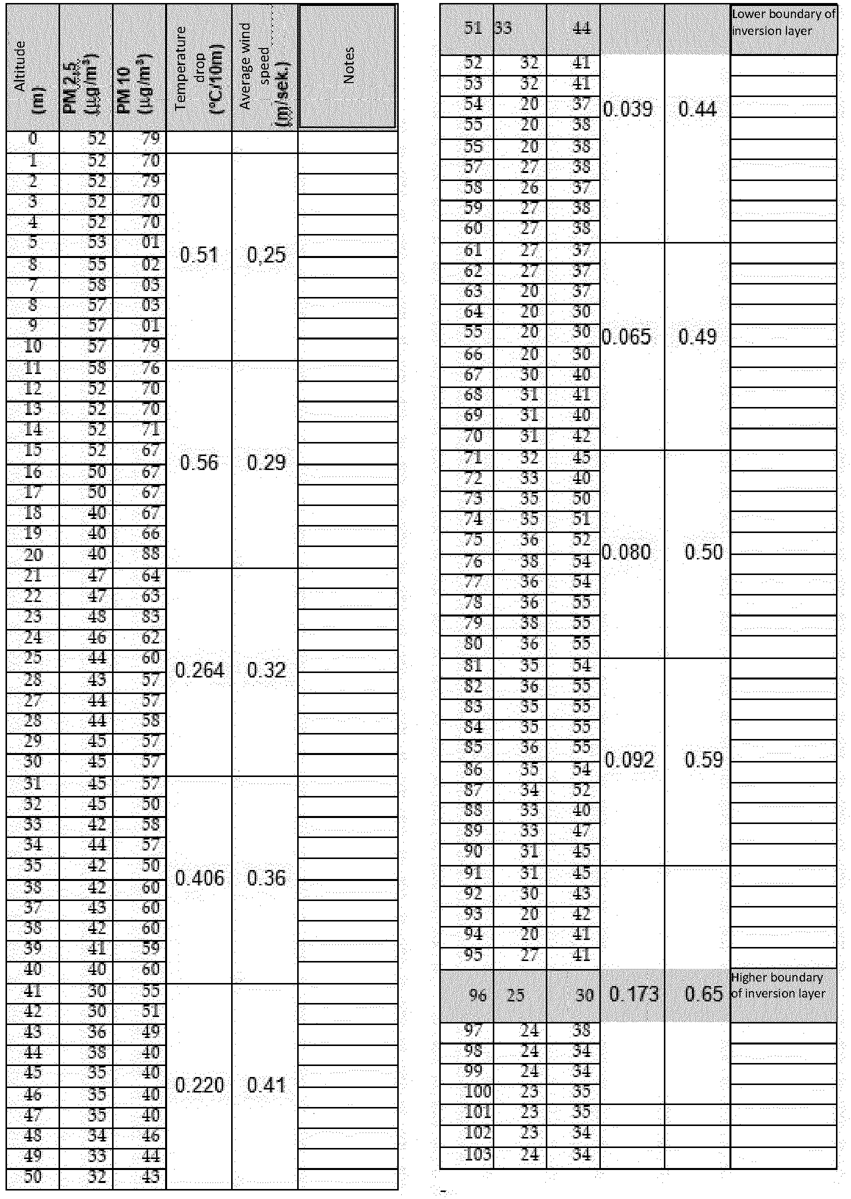

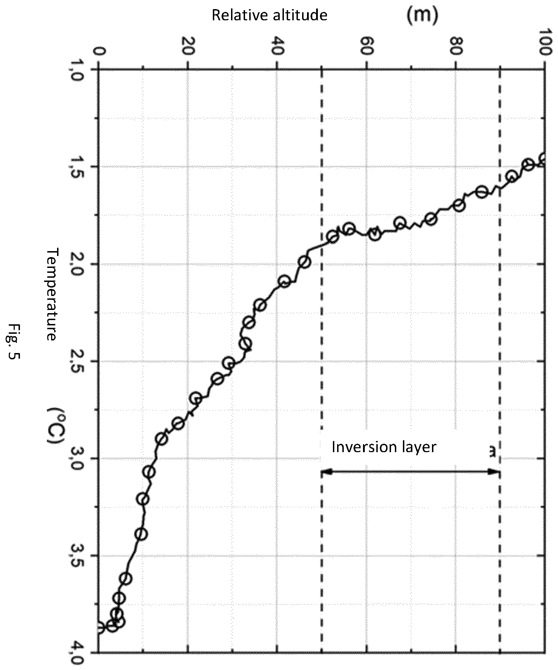

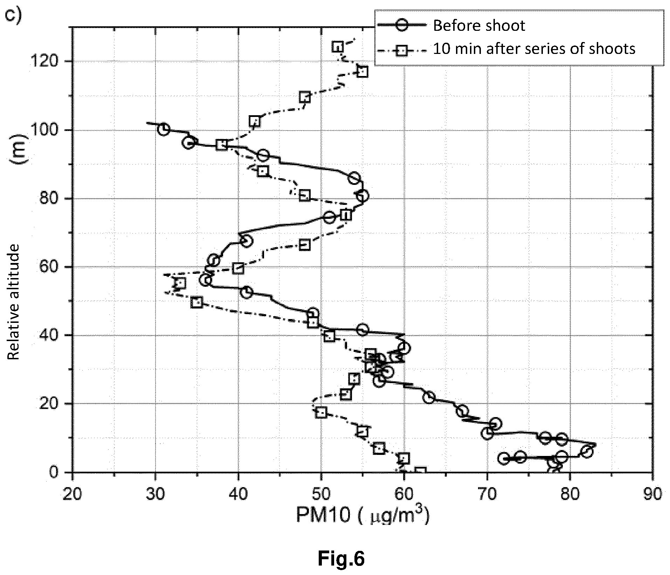

The measuring points were 1 m apart along the altitude, on the path of vertical ascent of MSP. The profile of changes in temperature, wind speed and accumulations of PM 2.5 and PM 10 along the altitude from 0 to 103 m was measured. The extent of the inversion layer was identified and determined. Measurements started from a height of 0 m. Fig. 5 shows a diagram of temperature changes with altitude, and Fig. 6 shows a diagram of PM 10 accumulation measurements along altitude. As shown in Table 1, from 0 to 50 m, the temperature drop for each 10 m was greater than 0.1°C and less than 1°C. The average wind speed on a 10 m was less than 0.8 m/s. The mobile measuring station was continued to be lifted. A temperature drop of 0.039°C was observed from an altitude of 50 to 60 m and a PM 2.5 accumulation higher than the limit accumulation of 25 µg/m³ was observed for 5 consecutive measurements obtained at altitudes of 50-54 m, which informed about the occurrence of the lower limit of the inversion layer, the base of which was assumed at an altitude of 50 m. Temperature drop below 0.1°C on a 10 m altitude was observed up to 90 m height. Then the mobile measuring station was lifted to further measuring heights on a 10 m altitude. Between 90 and 100 m, the temperature dropped by another 0.173°C, while accumulations of PM 2.5 and PM 10 for 5 consecutive measurements obtained at heights of 97 -101 m assumed values below the limits of 25 µg/m³ and 50 µg/m³ respectively. The average wind speed did not exceed 0.8 m/s. The height of 96 m was taken as the upper boundary of the inversion layer. Table 1 shows all measurements of the inversion layer. Then the average accumulation value of PM 2.5 and PM 10 in the layer from 0 to the upper limit of the inversion layer was determined, i.e. 96 m. The average value was 38 µg/m³ and 62 µg/m³ respectively. A mobile measuring station was brought to the ground and on the basis of the inversion layer measurements the size of the shockwave cycle was determined for 11 minutes, consisting of 110 explosions. A shockwave generator nozzle with a nozzle cone tip angle of 12° was used.

After the shock wave cycle with the anti-hail cannon, a control measurement of the dust accumulation was carried out at a distance of 10 m from the axis of the shot, taking a measurement from 0 to the height of the inversion layer (96 m), the measurement points were 1 m away from each other. For the measurement performed, the average accumulation of PM2.5 was 32 µg/m³, i.e. a decrease of 15.8%, and PM 10 was 49.9 µg/m³, i.e. a decrease of 19.5%. There was no decrease in the average accumulation of PM2.5 and PM10 from 0 to 100 m below 20 µg/m³ and 40 µg/m³ respectively. Then, as a result of the difference from the arithmetic average of measurements of accumulation before and after the shock wave generation cycle greater than 15%, the mobile measuring station was brought to the ground and the procedure of dust accumulation reduction was suspended for 3 hours.

The invention, can be used in heavily urbanized areas with high low emissions, where there is a natural condition for smog to remain as a result of creating an inversion layer (basins, river valleys). Smog accumulated as a result of creating an inversion layer, when there are no conditions for the natural process of smog dispersion, creates conditions that are dangerous to people's health and life. The invention allows to change the state of stagnation conditions preventing the natural process of smog dispersion, contributing to the temporary improvement of the air condition in the areas at risk of smog accumulation.

### References:

1. Ground level
2. Smog layer
3. Inversion layer
4. Mobile measurement station (MSP)- drone
5. Anti-hail cannon
6. Measurement path MSP
h1 - the lowest distance of the inversion layer from the ground level
h2 - the greatest distance of the inversion layer from the ground level
R - Radius of the base of the inverted shock wave cone, at a height of 100 m.

## Claims

1. Method of reducing the accumulation of dusts in the smog layer, which is an inversion layer, accumulated above an area with increased dust emission and enabling the creation of a thermal inversion area, using a mobile measuring station, equipped with devices for measuring air temperature, wind speed and dust accumulation, as well as an anti-hail cannon and a suitably programmed computer comprising a central unit, which is **characterised in that**:
- the air temperature and wind speed as well as the accumulation of PM 10, PM 2.5 in area are measured in situ, using a mobile measuring station, on a measuring path from 0 to the altitude at which the inversion layer is identified or up to 500 m,
- measurements are taken at predetermined measuring points, 1 to 20 m apart, preferably 1 m away from each other, and the results are transmitted by RF to the central unit, where they are compared with reference data and archived,
- the conditions for the implementation of the method are evaluated every 10 m and in case, if the average wind speed, calculated on the basis of 10 previously made measurements, is greater than 0.8 m/s and/or the temperature drop on every subsequent 10 m altitude is greater than 1.0°C, the measurement is stopped and the mobile measuring station is brought to the ground,
- if the wind speed is less than 0.8 m/s and/or the temperature drop on the 10 m altitude is less than 1.0°C, the mobile measuring station is raised to the next measuring point and continues the measurements,
- if at least 5 consecutive measurements at intervals of 1 m are obtained showing an accumulation of PM 10 greater than 50 µg/m³ and/or an accumulation of PM 2.5 greater than 25 µg/m³ and a temperature drop of 10 m altitude, less than 0.1°C, the measured area shall be considered an inversion layer, with the lower boundary equal to the first measurement height with exceeded dust accumulation values and low temperature gradient,
- measurements are continued until at least 5 consecutive measurements at intervals of 1 m are obtained, showing an accumulation of PM 10 less than 50 µg/m³ and/or an accumulation of PM 2.5 less than 25 µg/m³ and a temperature drop on the 10 m altitude greater than 0.1°C, which indicates the leaving the inversion layer and the upper boundary of the inversion layer is the last height at which the measurement showed conditions specific to the inversion layer,
- after determining the parameters of the inversion layer, the mobile measuring station is brought down to the ground,
- on the basis of parameters locating the inversion layer, the size of the shock wave cycle is determined, wherein the length of a single cycle is at least 10 minutes and consists of at least 60 explosions of the explosive mixture and is defined for an inversion layer with a lower boundary of 70 m and a thickness not exceeding 30 m and is extended by 1 minute for every 10 m higher position of the lower inversion layer boundary and for every 10 m thicker inversion layer,
- a mixture of combustible gases and air is introduced under pressure into the detonation chamber of the shock wave generator and then triggers its explosion, wherein an outlet stream of gases is directed to, the nozzle ending with a nozzle cone angle from 8° to 12°, the outlet pipe is perpendicular to the ground, wherein the detonation pressure of the combustible gas mixture is not less than 1 MPa,
- the filling of the detonation chamber of the shockwave generator is continuous and is stopped between the initiation of subsequent explosions is ≤ 10 seconds,
- after each shock wave generation cycle, the dust accumulation is measured at a distance of 10 to 20 m from the axis of the shot, using a mobile measuring station, on the same path as the measurements were made before the shock wave generation cycle,
- the arithmetic average is calculated from the measurements of accumulation made from 0 m to the level of the upper inversion layer, before the shock wave generation cycle and the calculated arithmetic average is subtracted from the measurements of accumulation made after the shock wave generation cycle,
- if the calculated difference from the arithmetic averages of the accumulation measurements is ≥15%, the method is stopped for at least 1 - 4 hours, and if it is less than 15%, the shock wave generation cycle is immediately repeated,
- if a decrease in the average PM 10 accumulation below 40 (µg/m³ and an average PM 2.5 accumulation below 20 µg/m³ is found, the procedure of lowering the accumulation of dusts in the smog layer ends.

2. The method according to claim 1 **characterised in that** in the case of dust accumulation in the inversion layer occurs at a critical level, a group of shock wave generators operating simultaneously is activated.

3. The method according to claim 1 and 2 **characterised in that**, If more than one generator is used, the generators are arranged in a circle and the distance between the individual generators is R to 3R, preferably 2R, where R is the radius of the base of the inverted cone, the shape of which takes the form of an impact wave, at the level of its contact with the lower boundary of the inversion layer, occurring at a height of 100 m.

4. The method according to claim 1 **characterised in that** the shock wave generators outlet lines are positioned at an angle of no more than 30° to the vertical, counting from the vertical.

5. The method according to claim 1 **characterised in that** for the inversion layer having lower boundary at a height of 50 m to 100 m, a nozzle with a 12° cone top angle is used.

6. The method according to claim 1 **characterised in that** for the inversion layer having lower boundary at a height of 100 m to 150 m, a nozzle with the top angle of the cone 10° is used.

7. The method according to claim 1 **characterised in that** for the inversion layer having lower boundary at a height of 150 m, a nozzle with the top angle of the cone 8° is used.

8. The method according to claim 1 **characterised in that** a mobile measuring station is used to carry out measurements, which is a flying device, preferably a drone type, equipped with appropriate measuring devices and wireless communication devices, programmed and controlled by the central unit via wireless communication.

## Patentansprüche

1. Verfahren zur Verringerung der Ansammlung von Stäuben in der Smogschicht, die eine Inversionsschicht ist, die sich über einem Gebiet mit erhöhter Staubemission ansammelt und die Schaffung eines thermischen Inversionsgebiets ermöglicht, unter Verwendung einer mobilen Messstation, die mit Vorrichtungen zur Messung der Lufttemperatur, der Windgeschwindigkeit und der Staubansammlung sowie einer Anti-Hagelkanone und einem entsprechend programmierten Computer mit einer Zentraleinheit ausgestattet ist, **dadurch gekennzeichnet, dass**:
- die Lufttemperatur und Windgeschwindigkeit sowie die Akkumulation von PM 10, PM 2.5 im Gebiet werden in situ mit einer mobilen Messstation auf einer Messstrecke gemessen von 0 bis zu der Höhe, in der die Inversionsschicht festgestellt wird, oder bis zu 500 m,
- Die Messungen werden an vorbestimmten Messpunkten im Abstand von 1 bis 20 m, vorzugsweise 1 m voneinander entfernt, vorgenommen und die Ergebnisse per Funk an die Zentraleinheit übertragen, wo sie mit Referenzdaten verglichen und archiviert werden,
- Die Bedingungen für die Durchführung der Methode werden alle 10 m ausgewertet, und wenn die auf der Grundlage von 10 zuvor durchgeführten Messungen berechnete durchschnittliche Windgeschwindigkeit größer als 0,8 m/s ist und/oder der Temperaturabfall auf jeder folgenden 10 m Höhe größer als 1,0°C ist, wird die Messung abgebrochen und die mobile Messstation auf den Erdboden gebracht,
- Wenn die Windgeschwindigkeit weniger als 0,8 m/s beträgt und/oder der Temperaturabfall auf 10 m Höhe weniger als 1,0°C beträgt, wird die mobile Messstation zum nächsten Messpunkt gefahren und setzt die Messungen fort,
- Wenn mindestens 5 aufeinanderfolgende Messungen in Abständen von 1 m durchgeführt werden, die eine Akkumulation von PM 10 von mehr als 50 pg/m³ und/oder eine Akkumulation von PM 2,5 von mehr als 25 pg/m³ und einen Temperaturabfall in 10 m Höhe von weniger als 0,TC ergeben, wird das gemessene Gebiet als Inversionsschicht betrachtet, wobei die untere Grenze der ersten Messhöhe mit überschrittenen Staubakkumulationswerten und einem geringen Temperaturgradienten entspricht,
- Die Messungen werden so lange fortgesetzt, bis mindestens fünf aufeinanderfolgende Messungen in Abständen von 1 m vorliegen, die eine Akkumulation von PM 10 unter 50 pg/m³ und/oder eine Akkumulation von PM 2,5 unter 25 pg/m³ und einen Temperaturabfall in 10 m Höhe von mehr als 0,TC ergeben, was auf das Verlassen der Inversionsschicht hinweist, und die obere Grenze der Inversionsschicht die letzte Höhe ist, in der die Messung die für die Inversionsschicht spezifischen Bedingungen ergeben hat,
- Nach der Bestimmung der Parameter der Inversionsschicht wird die mobile Messstation auf den Erdboden gebracht,
- auf der Grundlage von Parametern, die die Inversionsschicht lokalisieren, wird die Größe des Stoßwellenzyklus bestimmt, wobei die Dauer eines einzelnen Zyklus mindestens 10 Minuten beträgt und aus mindestens 60 Explosionen des Explosivstoffgemisches besteht und für eine Inversionsschicht mit einer unteren Grenze von 70 m und einer Dicke von höchstens 30 m definiert ist und für jede 10 m höhere Position der unteren Inversionsschichtgrenze und für jede 10 m dickere Inversionsschicht um 1 Minute verlängert wird,
- ein Gemisch aus brennbaren Gasen und Luft unter Druck in die Detonationskammer des Stoßwellengenerators eingeleitet wird und dann dessen Explosion auslöst, wobei ein Auslassstrom von Gasen auf die Düse gerichtet ist, die mit einem Düsenkegelwinkel von 8" bis 12° endet, das Auslassrohr senkrecht zum Erdboden steht, wobei der Detonationsdruck des brennbaren Gasgemisches nicht weniger als 1 MPa beträgt,
- die Füllung der Detonationskammer des Stoßwellengenerators ist kontinuierlich und wird zwischen der Auslösung nachfolgender Explosionen < 10 Sekunden gestoppt,
- Nach jedem Zyklus der Stoßwellenerzeugung wird die Staubansammlung in einem Abstand von 10 bis 20 m von der Achse des Schusses mit einer mobilen Messstation auf demselben Weg gemessen, auf dem die Messungen vor dem Zyklus der Stoßwellenerzeugung durchgeführt wurden,
- der arithmetische Mittelwert wird aus den Akkumulationsmessungen berechnet, die von 0 m bis zum Niveau der oberen Inversionsschicht vor dem Zyklus der Stoßwellenerzeugung durchgeführt wurden, und der berechnete arithmetische Mittelwert wird von den Akkumulationsmessungen subtrahiert, die nach dem Zyklus der Stoßwellenerzeugung durchgeführt wurden,
- Wenn die berechnete Differenz der arithmetischen Mittelwerte der Akkumulationsmessungen >15% ist, wird das Verfahren für mindestens 1 - 4 Stunden gestoppt, und wenn sie weniger als 15% beträgt, wird der Zyklus der Stoßwellenerzeugung sofort wiederholt,
- wenn eine Abnahme der durchschnittlichen Akkumulation von PM 10 unter 40 pg/m3 und eine durchschnittliche Akkumulation von PM 2,5 unter 20 pg/m³ festgestellt wird, endet das Verfahren zur Verringerung der Staubakkumulation in der Smogschicht.

2. Verfahren nach Anspruch 1, **dadurch gekennzeichnet, dass** bei einer Staubansammlung in der Inversionsschicht, die ein kritisches Niveau erreicht, eine Gruppe von gleichzeitig arbeitenden Stoßwellengeneratoren aktiviert wird.

3. Verfahren nach Anspruch 1 und 2, **dadurch gekennzeichnet, dass**, wenn mehr als ein Generator verwendet wird, die Generatoren kreisförmig angeordnet sind und der Abstand zwischen den einzelnen Generatoren R bis 3R, vorzugsweise 2R, beträgt, wobei R der Radius der Basis des umgekehrten Kegels ist, dessen Form die Form einer Aufprallwelle hat, auf der Höhe ihres Kontakts mit der unteren Grenze der Inversionsschicht, die in einer Höhe von 100 m auftritt.

4. Verfahren nach Anspruch 1, **dadurch gekennzeichnet, dass** die Auslassleitungen der Stoßwellengeneratoren in einem Winkel von nicht mehr als 30" zur Vertikalen angeordnet sind, von der Vertikalen aus gerechnet.

5. Verfahren nach Anspruch 1, **dadurch gekennzeichnet, dass** für die Inversionsschicht mit unterer Begrenzung in einer Höhe von 50 m bis 100 m eine Düse mit einem Kegelspitzenwinkel von 12° verwendet wird.

6. Verfahren nach Anspruch 1, **dadurch gekennzeichnet, dass** für die Inversionsschicht mit unterer Begrenzung in einer Höhe von 100 m bis 150 m eine Düse mit einem Kegelspitzenwinkel von 10° verwendet wird.

7. Verfahren nach Anspruch 1, **dadurch gekennzeichnet, dass** für die Inversionsschicht mit unterer Grenze in einer Höhe von 150 m eine Düse mit einem Kegelspitzenwinkel von 8° verwendet wird.

8. Verfahren nach Anspruch 1, **dadurch gekennzeichnet, dass** zur Durchführung der Messungen eine mobile Messstation verwendet wird, bei der es sich um ein fliegendes Gerät, vorzugsweise eine Drohne, handelt, das mit geeigneten Messgeräten und drahtlosen Kommunikationsgeräten ausgestattet ist und von der Zentraleinheit über drahtlose Kommunikation programmiert und gesteuert wird.

## Revendications

1. Procédé pour réduire l'accumulation des poussières dans la couche de smog constituante une couche d'inversion, accumulées au-dessus d'une zone à émission des poussières accrue et permettant la création d'une zone d'inversion thermique, utilisant une station de mesure mobile équipée de dispositifs de mesure de la température de l'air, de la vitesse du vent et de l'accumulation des poussières, ainsi qu'un canon antigrêle et un ordinateur programmé de manière appropriée comprenant une unité centrale, **caractérisé en ce que** :
- la température de l'air et la vitesse du vent ainsi que l'accumulation de PM 10, PM 2.5 dans la zone sont mesurées in situ utilisant une station de mesure mobile, sur un parcours de mesure allant de 0 à l'altitude à laquelle la couche d'inversion est identifiée ou jusqu'à 500 m,
- les mesures sont réalisées en des points de mesure prédéterminés distants de 1 à 20 m, de préférence de 1 m, et les résultats sont transmis par RF à l'unité centrale, où ils sont comparés à des données de référence et archivés,
- les conditions de mise en œuvre du procédé sont évaluées tous les 10 m et si, au cas où la vitesse moyenne du vent calculée sur la base de 10 mesures effectuées précédemment, est supérieure à 0,8 m/s et/ou si la chute de température sur chaque 10 m d'altitude suivant est supérieure à 1,0°C, la mesure est arrêtée et la station de mesure mobile est descendue au sol,
- si la vitesse du vent est inférieure à 0,8 m/s et/ou si la chute de température à 10 m d'altitude est inférieure à 1,0°C, la station de mesure mobile est élevée au point de mesure suivant et poursuit les mesures,
- si l'on obtient au moins 5 mesures consécutives à des intervalles de 1 m montrant une accumulation de PM 10 supérieure à 50 µg/m³ et/ou une accumulation de PM 2,5 supérieure à 25 µg/m³ et une chute de température de 10 m d'altitude inférieure à 0,1°C, la zone mesurée est considérée comme une couche d'inversion dont la limite inférieure est égale à la première hauteur de mesure avec des valeurs d'accumulation des poussières dépassées et un faible gradient de température,
- les mesures sont poursuivies jusqu'à l'obtention d'au moins 5 mesures consécutives à des intervalles de 1 m, montrant une accumulation de PM 10 inférieure à 50 µg/m³ et/ou une accumulation de PM 2,5 inférieure à 25 µg/m³ et une baisse de température sur l'altitude de 10 m supérieure à 0,1°C indiquant la sortie de la couche d'inversion et la limite supérieure de la couche d'inversion est la dernière hauteur à laquelle la mesure a montré des conditions spécifiques à la couche d'inversion,
- après avoir déterminé les paramètres de la couche d'inversion, la station de mesure mobile est descendue au sol,
- la taille du cycle d'ondes de choc est déterminée sur la base des paramètres localisant la couche d'inversion, dans lequel la durée d'un cycle unique est d'au moins 10 minutes et consiste en au moins 60 explosions du mélange explosif et est définie pour une couche d'inversion avec une limite inférieure de 70 m et une épaisseur ne dépassant pas 30 m et est prolongée de 1 minute pour chaque position supérieure de 10 m de la limite inférieure de la couche d'inversion et pour chaque couche d'inversion plus épaisse de 10 m,
- un mélange de gaz combustibles et d'air est introduit sous pression dans la chambre de détonation du générateur d'ondes de choc puis déclenche son explosion, dans lequel un flux de gaz de sortie étant dirigé vers, la buse se terminant avec un angle de cône de buse de 8° à 12°, le tuyau de sortie est perpendiculaire au sol, dans lequel la pression de détonation du mélange de gaz combustible n'étant pas inférieure à 1 MPa,
- le remplissage de la chambre de détonation du générateur d'ondes de choc est continu et s'arrête entre le déclenchement des explosions suivantes est ≤ 10 secondes,
- après chaque cycle de génération d'ondes de choc, l'accumulation des poussières est mesurée à une distance de 10 à 20 m de l'axe du tir utilisant une station de mesure mobile sur le même chemin que celui où les mesures ont été réalisées avant le cycle de génération d'ondes de choc,
- la moyenne arithmétique est calculée à partir des mesures d'accumulation effectuées de 0 m au niveau de la couche d'inversion supérieure, avant le cycle de génération d'ondes de choc et la moyenne arithmétique calculée est soustraite des mesures d'accumulation effectuées après le cycle de génération d'ondes de choc,
- si la différence calculée par rapport aux moyennes arithmétiques des mesures d'accumulation est ≥15%, le procédé est arrêté pendant au moins 1 à 4 heures et si elle est inférieure à 15%, le cycle de génération d'ondes de choc est immédiatement répété,
- si l'on constate une diminution de l'accumulation moyenne de PM 10 en dessous de 40 µg/m³ et une accumulation moyenne de PM 2,5 en dessous de 20 µg/m³, la procédure de réduction de l'accumulation des poussières dans la couche de smog prend fin.

2. Procédé selon la revendication 1, **caractérisé en ce que** dans le cas où l'accumulation des poussières dans la couche d'inversion atteint un niveau critique, un groupe de générateurs d'ondes de choc fonctionnant simultanément est activé.

3. Procédé selon les revendications 1 et 2, **caractérisé en ce que**, si plus d'un générateur est utilisé les générateurs sont disposés en cercle et la distance entre les générateurs individuels est de R à 3R, de préférence 2R où R est le rayon de la base du cône inversé, dont la forme prend celle d'une onde d'impact, au niveau de son contact avec la limite inférieure de la couche d'inversion survenant à une hauteur de 100 m.

4. Procédé selon la revendication 1, **caractérisé en ce que** les lignes de sortie des générateurs d'ondes de choc sont positionnées à un angle de pas plus de 30° par rapport à la verticale, en comptant à partir de la verticale.

5. Procédé selon la revendication 1, **caractérisé en ce que** pour la couche d'inversion ayant une limite inférieure à une hauteur de 50 m à 100 m, une buse avec un angle de sommet de cône de 12° est utilisée.

6. Procédé selon la revendication 1, **caractérisé en ce que** pour la couche d'inversion ayant une limite inférieure à une hauteur de 100 m à 150 m, une buse avec un angle supérieur du cône de 10° est utilisée.

7. Procédé selon la revendication 1, **caractérisé en ce que** pour la couche d'inversion ayant une limite inférieure à une hauteur de 150 m, une buse avec un angle supérieur du cône de 8° est utilisée.

8. Procédé selon la revendication 1 **caractérisé en ce qu'**une station de mesure mobile est utilisée pour effectuer les mesures constituant un dispositif volant, de préférence de type drone équipé de dispositifs de mesure appropriés et de dispositifs de communication sans fil, programmé et commandé par l'unité centrale via une communication sans fil.
